# EUROPÄISCHE PATENTSCHRIFT

(11) **EP 0 712 797 B1**
(45) Veröffentlichungstag und Bekanntmachung des Hinweises auf die Patenterteilung: **28.01.1998**
(21) Anmeldenummer: 95117377.2
(22) Anmeldetag: 04.11.1995
(51) Int. Cl.: B65G 15/52, B65G 17/42

(54) **Stabband für Stabbandförderer, insb. an landwirtschaftlichen Maschinen**
Rod belt for rod belt conveyor particularly for agricultural machines
Courroie à barres pour bande transporteuse spécialement pour machines agricoles

(30) Priorität: 18.11.1994 DE 4441084
(43) Veröffentlichungstag der Anmeldung: 22.05.1996
(73) Patentinhaber: Jäger, Sebastian, 30559 Hannover (DE)
(72) Erfinder: Jäger, Sebastian, 30559 Hannover (DE)
(74) Vertreter: Depmeyer, Lothar

(56) Entgegenhaltungen:
- DE-A- 3 318 735
- GB-A- 2 197 019
- US-A- 3 734 269
- US-A- 5 337 887

## Beschreibung

Die Erfindung betrifft ein Stabband für Stabbandförderer, insb. an landwirtschaftlichen Maschinen, das zwei oder mehrere zugfeste, einander parallele, in Bandlängsrichtung verlaufende Gurte aufweist, die durch quer zu den Gurten verlaufende, mit gegenseitigem Abstand angeordnete, steife Stäbe verbunden sind, die Mitnehmer für das Fördergut aufweisen, welche einen Fuss mit einem unterhalb und einem oberhalb der Stäbe befindlichen Abschnitt aufweisen, die formschlüssig miteinander verbunden sind.

Bei den bekannten Stabbändern dieser Art (DE-A-3318735) wird der Formschluss durch eine Vorwölbung an einem Abschnitt erreicht, die in eine flache Nut des anderen Abschnittes eingreift. Zudem werden die Abschnitte zum Montieren der Mitnehmer aufgeklappt, um so den Mitnehmer nur durch eine elastische Verformung der Abschnitte entfernen zu können Ferner können noch Befestigungsmittel, und zwar Stifte, Schrauben oder Klemmittel verwendet werden, um den Zusammenhalt der Abschnitte sicherzustellen.

Der Erfindung liegt die Aufgabe zugrunde, eine besondere Befestigungsart für die Mitnehmer vorzuschlagen, die bei einem Verzicht auf die vorgenannten Befestigungsmittel eine ausreichend stabile Fussbefestigung an den Stäben des Stabbandes sicherstellt.

Zur Lösung dieser Aufgabe ist erfindungsgemäss vorgesehen, die beiden Abschnitte des Fusses miteinander zu verhaken, wobei zweckmässigerweise eine unter Zugspannung stehende Hakenverbindung benutzt werden soll. Zudem ist es zweckmässig, eine solche Hakenverbindung nur an einem Ende der beiden übereinanderliegenden Abschnitte anzuordnen und am anderen Ende der Abschnitte eine Gelenkverbindung vorzusehen, an der die beiden Abschnitte einstückig ineinander übergehen.

Eine solche Hakenverbindung kann schnell hergestellt werden, und es ist dann sichergestellt, dass eine ausreichend feste Fussverankerung eintritt. Es bedarf somit keiner zusätzlichen Hilfsmittel in Form von Schrauben und dgl.

Die Zugspannung an der Hakenverbindung erreicht man vorzugsweise durch eine Herstellung der Mitnehmer bzw. ihrer Füsse im Strangpressverfahren in der Weise, dass die Abschnitte nach der Verfestigung des Werkstoffes im Winkel zueinander angeordnet sind, sodass sie zur Montage an den Stabbändern in Parallelstellung gebracht werden müssen, wobei dann in die Gelenkverbindung zwischen den Abschnitten eine Spannung eingeleitet wird, die zu der gewünschten Zugspannung am gegenüberliegenden Ende der Abschnitte führt, an dem sich die Hakenverbindung befindet.

Weitere Einzelheiten der Erfindung werden anhand der Zeichnung erläutert, in der ein Ausführungsbeispiel der Erfindung dargestellt ist. Es zeigen :

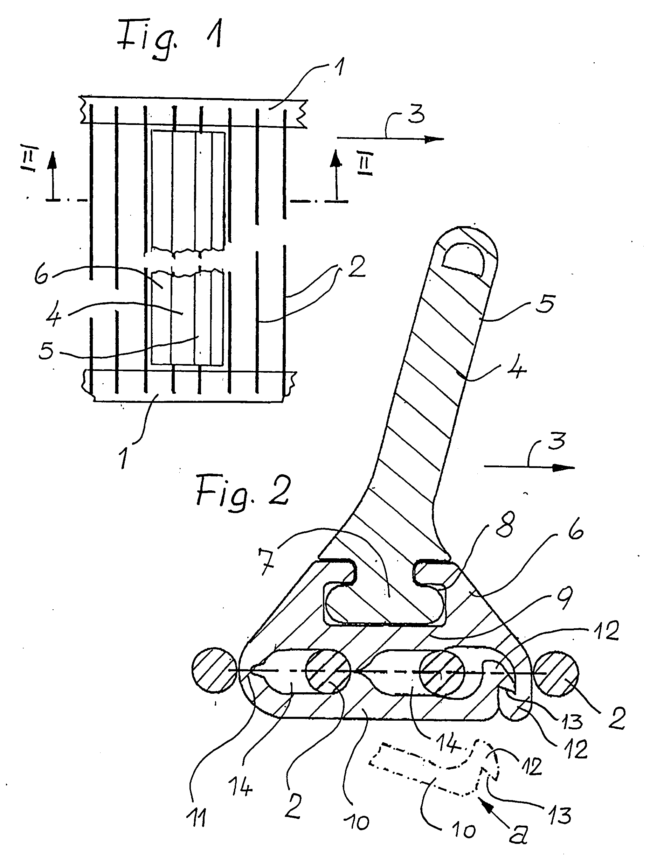

Fig. 1 eine Teildraufsicht auf ein Stabband für eine landwirtschaftliche Maschine und
Fig. 2 einen Schnitt nach der Linie II - II von Fig. 1 unter Weglassung eines Gurtes.

Das Stabband besteht im wesentlichen aus zwei parallelen Gurten 1, die über eine Vielzahl einander paralleler, quer zu den Gurten 1 verlaufenden Stäbe 2 in Verbindung stehen. Im Förderer der landwirtschaftlichen Maschine bewegt sich das Stabband in Richtung des Pfeiles 3.

Die Gurte 1 sind zugfest, jedoch biegsam. Sie können aus beliebigen Werkstoffen gefertigt sein, ggfs. auch von Gliedern gebildet sein, vorzugsweise werden jedoch gewebeverstärkte Elastomerbänder benutzt. Die Stäbe 2 sind biegefest und steif; meist werden sie aus Stahl hergestellt. Die Verbindung zwischen den Stäben 2 und den Gurten 1 soll widerstandsfähig sein. Meist werden Nietverbindungen eingesetzt.

Die im Abstand voneinander angeordneten Stäbe 2 ermöglichen insb. bei landwirtschaftlichen Maschinen eine gewisse Siebung; um darüber hinaus noch weitere Aufgaben erfüllen zu können, sind bei den nach der Anmeldung vorgesehenen Stabbändern quer zu den Stabbändern , also in Richtung der Stäbe 2 verlaufende Mitnehmer 4 vorgesehen, die an sich beliebig ausgebildet sein können.

Die Mitnehmer 4 werden von einem geringfügig in die Förderrichtung nach vorne geneigten eigentlichen Förderelement 5 gebildet, das von einem Fuss 6 getragen ist, der mit dem Stabband bzw. seinen Stäben 2 verbunden ist. Die Teile 5, 6 sind Profile; sie erstrecken sich praktisch von einem zum anderen Gurt 1 und werden aus einem zähharten Kunststoff oder Gummi erstellt.

Das stegartige Förderelement 5 hat eine hammerkopfartige oder auch schwalbenschwanzförmige Basis 7, die in eine entsprechend geformte Nut 8 des Fusses 6 eingeschoben ist. Der dadurch bedingte Formschluss ( ggfs. Kraftschluss ) sichert eine ausreichend gute Verbindung der Basis 7 mit dem Fuss 7, jedoch mit dem Vorteil, dass die Teile 5, 6 beliebig zusammengefügt und voneinander getrennt werden können z.B. nach Verschleiss oder zur Montage.

Der Fuss 6 umschliesst zwei Stäbe 2 und erstreckt sich bis zu den Stäben 2, die den umschlossenen Stäben 2 benachbart liegen. Demgemäss liegt oberhalb der Stäbe 2 ein mit der Nut 8 versehene Abschnitt 9 und unterhalb der Stäbe 2 ein Abschnitt 10. An einem Ende bei 11 gehen die Abschnitte 9, 10 einstückig ineinander über. Dort ist die Wandstärke vermindert, um eine scharnierartige Bewegung der Abschnitte 9, 10 zueinander zuzulassen. Am gegenüberliegenden Ende sind beide Abschnitte 9, 10 mit einem angeformten Haken 12 versehen, die je eine hinterschnittene Fläche 13 haben. Im montierten Zustand greifen die Haken 12 ineinander und sichern so den Halt des Fusses 6.

Um die Hakenverbindung besonders sicher zu machen, steht die Hakenverbindung unter Zugspannung. Die hinterschnittenen Flächen 13 liegen also mit Spannung aufeinander. Um dies erreichen zu können, wird das den Fuss 6 bildende Profil so hergestellt, dass die beiden Abschnitte 9, 10 im Winkel z.B. unter einem Winkel von etwa 30 - 40 zueinander stehen. Vgl. dazu die gestrichelte Stellung bei a. Zum Zwecke der Montage werden die beiden Abschnitte 9, 10 zusammengeklappt, wobei die Hakenverbindung hergestellt wird. Dies erfolgt unter elastischer Verformung bei 11, um so in die Abschnitte eine elastische Spannung einzuleiten, die danachh trachtet, die Hakenverbindung zu lösen. Eine auf Zug beanspruchte Hakenverbindung kann ggfs. auch dadurch erreicht werden, dass man die Abschnitte 9 und/oder 10 gekrümmt herstellt und die Krümmung beim Verhaken ( durch elastische Verformung der Abschnitte )aufhebt.

Wie aus der Zeichnung erkennbar ist, bilden die Abschnitte 9,10 Aufnahmen 14 für je einen Stab 2, und zwar Langlöcher, die aus kinematischen Gründen erforderlich sind.

Die Hakenverbindung der Abschnitte 9, 10 ist so beständig, dass zusätzliche Halte- und Befestigungsmittel überflüssig werden. Es bedarf also keiner zusätzlichen Manipulationen, wenn die Hakenverbindung hergestellt ist.

Es liegt ferner im Rahmen der Erfindung, die Länge des Förderelemntes 5 grösser zu wählen im Vergleich zur Länge des zugehörigen Fusses 6, und zwar in der Weise, dass zumindest ein Ende des Förderelementes 5 (im Grundriss gesehen) sich über einen Gurt 1 erstreckt. Vorzugsweise wird man natürlich die Länge des Förderelementes 5 so wählen, dass sich beide Enden des Förderelementes 5 über einem Gurt 1 befinden, um so eine möglichst grosse wirksame Fläche des Förderelementes 5 zu erzielen. Für den Fall. dass drei oder mehrere Gurte 1 benutzt werden, kann die Länge des Förderelementes 5 auch so gewählt sein, dass das oder die im Mittelbereich des Stabbandes befindlichen Gurte 1 von dem Förderelement 5 überbrückt werden. Die Füsse 6 befinden sich dann nur im frei verlaufenden Teil der Stäbe 2, während sich das Förderelement 5 praktisch über die gesamte Breite des Stabbandes erstrecken kann. --- Es sei bemerkt, dass diese Ausbildung des Förderelementes 5 auch bei solchen Stabbändern benutzbar ist, bei denen der Fuss 6 unter Verzicht auf eine Hakenverbindung bzw. in abweichender Form an den Stäben 1 verankert ist.

## Patentansprüche

1. Stabband für Stabbandförderer, insb. an landwirtschaftlichen Maschinen, das zwei oder mehrere zugfeste, einander parallele, in Bandlängsrichtung verlaufende Gurte (1) aufweist, die durch quer zu den Gurten (1) verlaufende, mit gegenseitigem Abstand angeordnete, biegefeste Stäbe (2) verbunden sind, die Mitnehmer (4) für das Fördergut aufweisen, welche einen Fuss (6) mit einem unterhalb und einem oberhalb der Stäbe (2) befindlichen Abschnitt (9,10) aufweisen, die formschlüssig miteinander verbunden sind, dadurch gekennzeichnet, dass die beiden Abschnitte (9,10) miteinander verhakt sind.

2. Stabband nach Anspruch 1, dadurch gekennzeichnet, dass die Hakenverbindung unter Zugspannung steht.

3. Stabband nach Anspruch 1, dadurch gekennzeichnet, dass die beiden Abschnitte (9,10) an einem Ende (11) gelenkig miteinander verbunden sind und sich die Hakenverbindung am anderen Ende der Abschnitte befindet.

4. Stabband nach Anspruch 3, dadurch gekennzeichnet, dass die Abschnitte (9,10) aus einem elastisch verformbaren Werkstoff bestehen, an einem Ende einstückig ineinander übergehen und zur Bildung der Gelenkstelle eine Verringerung der Wandstärke vorgesehen ist.

5. Stabband nach Anspruch 1, 2 und 4, dadurch gekennzeichnet, dass die Abschnitte (9,10) im nicht montierten Zustand der Mitnehmer einen Winkel miteinander Bilden.

6. Stabband nach Anspruch 5, dadurch gekennzeichnet, dass der Winkel etwa 30 - 40° beträgt.

7. Stabband nach Anspruch 1, dadurch gekennzeichnet, dass die die Hakenverbindung bildenden Elemente (12) sich als Leisten über die gesamte Länge der Mitnehmer (4) erstrecken.

8. Stabband nach Anspruch 1, dadurch gekennzeichnet, dass das eigentliche Förderelement (5) des Mitnehmers (4) lösbar mit dem Fuss (6) des Mitnehmers verbunden ist.

9. Stabband nach Anspruch 8, dadurch gekennzeichnet, dass das eine der miteinander zu verbindenden Elemente eine hinterschnitte Längsnut (8) aufweist und das andere Element eine vorspringende Leiste, die dem Querschnitt der Längsnut entspricht.

10. Stabband nach Anspruch 9, dadurch gekennzeichnet, dass die Verbindungsstelle einen Querschnitt nach Art eines Hammerkopfes oder Schwalbenschwanzes aufweist.

11. Stabband nach Anspruch 1, dadurch gekennzeichnet, dass die Abschnitte (9,10) sich praktisch bis zu oder bis in die Nähe der Stäbe (2) erstrecken, die den von ihnen umschlossenen Stäben (2) benachbart liegen.

12. Stabband nach Anspruch 8, dadurch gekennzeichnet, dass die Länge des eigentlichen Förderelementes (5) grösser ist als diejenige des zugeordneten Fusses (6) in der Weise, dass zumindest ein Ende des Förderelementes (5) über einem Gurt (1) angeordnet ist.

13. Stabband nach Anspruch 12, dadurch gekennzeichnet, dass die Länge des Förderelemetes (5) zumindest im wesentlichen der Breite des Stabbandes entspricht.

14. Stabbband nach Anspruch 12, dadurch gekennzeichnet, dass bei drei oder mehreren Gurten (1) zumindest ein im Mittelbereich des Stabbandes befindlicher Gurt von einem Förderelement (5) überbrückt ist.

## Claims

1. Barred belt for barred belt conveyors, more especially for use with agricultural machines, the longitudinally displaceable barred belt having two or more substantially inextensible bands, which lie parallel to one another and extend in the longitudinal direction of the belt, said bands being connected by bend-resistant bars which extend transversely relative to the bands and are disposed with mutual spacings therebetween, said bars having entrainment means which entrain the material for conveyance and have a base provided with a portion situated beneath the bars and a portion situated above the bars, the portions being interconnected in a form-locking manner, characterised in that the two portions (9, 10) are hooked together.

2. Barred belt according to claim 1, characterised in that the hook connection is subject to tensile stress.

3. Barred belt according to claim 1, characterised in that the two portions (9, 10) are pivotally interconnected at one end (11), and the hook connection is situated at the other end of the portions.

4. Barred belt according to claim 3, characterised in that the portions (9, 10) are formed from a resiliently deformable material and merge into one another integrally at one end, a reduction in the wall thickness being provided to form the pivotal location.

5. Barred belt according to claims 1, 2 and 4, characterised in that the portions (9, 10) form an angle with one another when the entrainment means are in their non-assembled state.

6. Barred belt according to claim 5, characterised in that the angle is substantially 30 - 40°.

7. Barred belt according to claim 1, characterised in that the component parts (12), which form the hook connection, extend as strips over the entire length of the entrainment means (4).

8. Barred belt, more especially according to claim 1, characterised in that the actual conveyor element (5) of the entrainment means (4) is detachably connected to the base (6) of the entrainment means.

9. Barred belt according to claim 8, characterised in that one of the component parts to be interconnected has an undercut elongate groove (8), and the other component part has a protruding strip which corresponds to the cross-section of the elongate groove.

10. Barred belt according to claim 9, characterised in that the connection location has a cross-section in the form of a hammer head or dovetail.

11. Barred belt according to claim 1, characterised in that the portions (9, 10) extend virtually to the bars (2) or to the vicinity thereof, which portions lie adjacent to the bars (2) which are surrounded thereby.

12. Barred belt according to claim 8, characterised in that the length of the actual conveyor element (5) is greater than that of the associated base (6) in such a manner that at least one end of the conveyor element (5) is disposed above a band (1).

13. Barred belt according to claim 12, characterised in that the length of the conveyor element (5) corresponds at least substantially to the width of the barred belt.

14. Barred belt according to claim 12, characterised in that, when there are three or more bands (1), at least one band, situated in the central region of the barred belt, is bridged by a conveyor element (5).

## Revendications

1. Bande transporteuse à barreaux pour convoyeur à bande à barreaux, notamment de machines agricoles, la bande transporteuse à barreaux mobile dans le sens longitudinal comportant deux ou plus de deux courroies résistant à la traction, parallèles entre elles et s'étendant dans la direction longitudinale de la bande, et qui sont reliées par des barreaux s'étendant transversalement aux courroies à distance les uns des autres et résistant à la flexion, qui comportent des griffes d'entraînement de la matière à transporter, lesquelles comportent un pied ayant une section en-dessous des barreaux et une section au-dessus des barreaux, les sections étant reliées l'une à l'autre par complémentarité de forme, caractérisée en ce que les deux sections (9, 10) sont ancrées l'une à l'autre.

2. Bande transporteuse à barreaux suivant la revendication 1, caractérisée en ce que l'ancrage est soumis à une contrainte de traction.

3. Bande transporteuse à barreaux suivant la revendication 1, caractérisée en ce que les deux sections (9, 10) sont reliées entre elles de manière articulée à une extrémité (11) et en ce que l'ancrage se trouve à l'autre extrémité des sections.

4. Bande transporteuse à barreaux suivant la revendication 3, caractérisée en ce que les sections (9,10) sont en un matériau pouvant être déformé élastiquement, passent l'une dans l'autre d'une pièce à une extrémité et une diminution de l'épaisseur de la paroi est prévue pour former le point d'articulation.

5. Bande transporteuse à barreaux suivant la revendication 1, 2 ou 4, caractérisée en ce que les sections (9, 10) font un angle entre elles lorsque les griffes d'entraînement ne sont pas montées.

6. Bande transporteuse à barreaux suivant la revendication 5, caractérisée en ce que l'angle est d'environ de 30 à 40°.

7. Bande transporteuse à barreaux suivant la revendication 1, caractérisée en ce que les éléments (12) formant l'ancrage s'étendent sous forme de barrette sur toute la longueur des griffes (4) d'entraînement.

8. Bande transporteuse à barreaux, notamment suivant la revendication 1, caractérisée en ce que l'élément (5) de convoyage proprement dit de la griffe (4) d'entraînement est relié de manière amovible au pied (6) de la griffe d'entraînement.

9. Bande transporteuse à barreaux suivant la revendication 8, caractérisée en ce que l'un des éléments à relier les uns aux autres comporte une rainure (8) longitudinale en contre-dépouille et l'autre élément a une barrette saillante, correspondant à la section transversale de la rainure longitudinale.

10. Bande transporteuse à barreaux suivant la revendication 9, caractérisée en ce que le point de liaison a une section transversale du genre d'une tête de marteau ou d'une queue d'aronde.

11. Bande transporteuse à barreaux suivant la revendication 1, caractérisée en ce que les sections (9, 10) s'étendent pratiquement jusqu'aux barreaux (2) ou jusqu'à proximité des barreaux (2) voisins des barreaux (2) qu'elles enserrent.

12. Bande transporteuse à barreaux suivant la revendication 8 caractérisée en ce que la longueur de l'élément (5) de convoyage proprement dit est plus grande que celle du pied (6) associé de telle sorte qu'au moins une extrémité de l'élément (5) de convoyage soit disposée au-dessus d'une courroie (1).

13. Bande transporteuse à barreaux suivant la revendication 12, caractérisée en ce que la longueur de l'élément (5) de convoyage correspond au moins sensiblement à la largeur de la bande transporteuse à barreaux.

14. Bande transporteuse à barreaux suivant la revendication 12, caractérisée en ce que pour trois courroies (1) ou plus de trois courroies (1), au moins une courroie se trouvant dans la zone médiane de la bande transporteuse à barreaux est surmontée par un élément (5) de convoyage.
